Europäisches Patentamt

(19) European Patent Office

Office européen des brevets

(11) Publication number: **0 012 011**
A1

(12) # EUROPEAN PATENT APPLICATION

(21) Application number: **79302715.2**

(22) Date of filing: **29.11.79**

(51) Int. Cl.³: **A 01 G 9/00**
**A 01 G 27/00**

(30) Priority: **29.11.78 GB 4657078**
**19.04.79 GB 7913560**

(43) Date of publication of application:
**11.06.80 Bulletin 80/12**

(84) Designated Contracting States:
**CH DE FR GB NL SE**

(71) Applicant: **Hope, James**
**Birds Mill**
**Broxburn, West Lothian EH52 5PB(GB)**

(72) Inventor: **Hope, James**
**Birds Mill**
**Broxburn, West Lothian EH52 5PB(GB)**

(74) Representative: **Arthur, John W.**
**FITZPATRICKS 14/18 Cadogan Street**
**Glasgow G2 6QW Scotland(GB)**

(54) **Apparatus and method for producing an upright array of plants.**

(57) Apparatus for use in producing an upright array of plants includes a number of elongate open-topped containers (10) located horizontally but in different planes, e.g. a column of containers located one below the other.

Several columns may be provided.

The containers have false bottoms (24) on to which a supply of plant growing medium (31) is placed. The space below the false bottom provides for a water reservoir (26). The containers are fed by a gravity water feed means including an inlet pipe (12) feeding water into a container, and an outlet (18) through which excess water passes to the next lower container. The outlet is located at a height above the container base (14) so that a water reservoir of a predetermined maximum depth can be provided. The outlet may be a hole (18) in the base narrowed by an upstanding tube (20) the height of which determines the maximum depth of the reservoir. The containers are suspended from pairs of straps by means of co-operating flanges on the straps and opposed ends of the containers. When the apparatus is erected and filled with plants, a visually pleasing arrangement can be achieved in many forms for useful as well as decorative purposes.

Fig. 1.

Apparatus for use in producing an upright array of plants.

This invention relates to apparatus for use in producing an upright array of plants.

According to one aspect of the present invention, there is provided apparatus for use in producing an upright array of plants comprising a plurality of containers spaced in different horizontal planes and interconnected by water feed means which includes a water inlet tube communicating with the base of each container and a water outlet located in each container at a height above the base to permit formation of a water reservoir in, and overflow from each container, said outlet being connected to the inlet tube of the adjacent lower container, the outlet of the lowermost container communicating with a drain or other water collection means.

Preferably, each water outlet aperture is in the base of the container and has an upstanding surround over which excess water flows.

Preferably, each container includes a false bottom on which medium for the plants can be located, said false bottom having a plurality of apertures to receive capillary means. Preferably also, the water inlet tube extends through said false bottom and has outlet ports therebelow.

Preferably, the inlet pipe and overflow pipe are concentric, the inlet pipe having an outlet port on a level lower than that of the outlet of the overflow pipe.

A series of pluralities of containers may be provided each plurality of containers being spaced in different vertical planes; preferably also, the uppermost container of each series is interconnected with a single source of feed water and, preferably, the lowermost container of each series is interconnected to a single outlet to a drain or other water collection means.

Preferably also, the containers have support engagement means and support members are provided for engaging said means, said support members comprising straps having engagement means to co-operate with the engagement means on the container, the straps being located in vertical disposition and spaced apart horizontally to receive one or more containers therebetween.

Preferably, said straps are suspended and have co-operating fitment means permitting a plurality of straps to be connected end to end.

Preferably also, each strap has on one side a series of flanges and an alternating series of holes, one of which is at one end of the strap, and a stud at the other end adapted to engage a hole of an adjacent strap, thereby to form an elongate strapping adapted for location in opposed pairs to receive containers therebetween, said containers having means for engaging flanges on the opposed strappings.

According to another aspect of the present invention, there is provided a method of arranging plant containers comprising the steps of locating a plurality of containers in different horizontal planes, providing a cascading water feed in the form of a water inlet to each container and a water outlet in each container connected to the water inlet of the adjacent lower container and locating each water outlet at a height which allows a predetermined depth of water to collect in the respective container during feeding and after which excess water will overflow through said outlet into the adjacent lower container and feeding the excess water from the lowermost container to a drain or other water collection means.

Embodiments of the present invention will now be described, by way of example, with reference to the accompanying drawings, in which:-

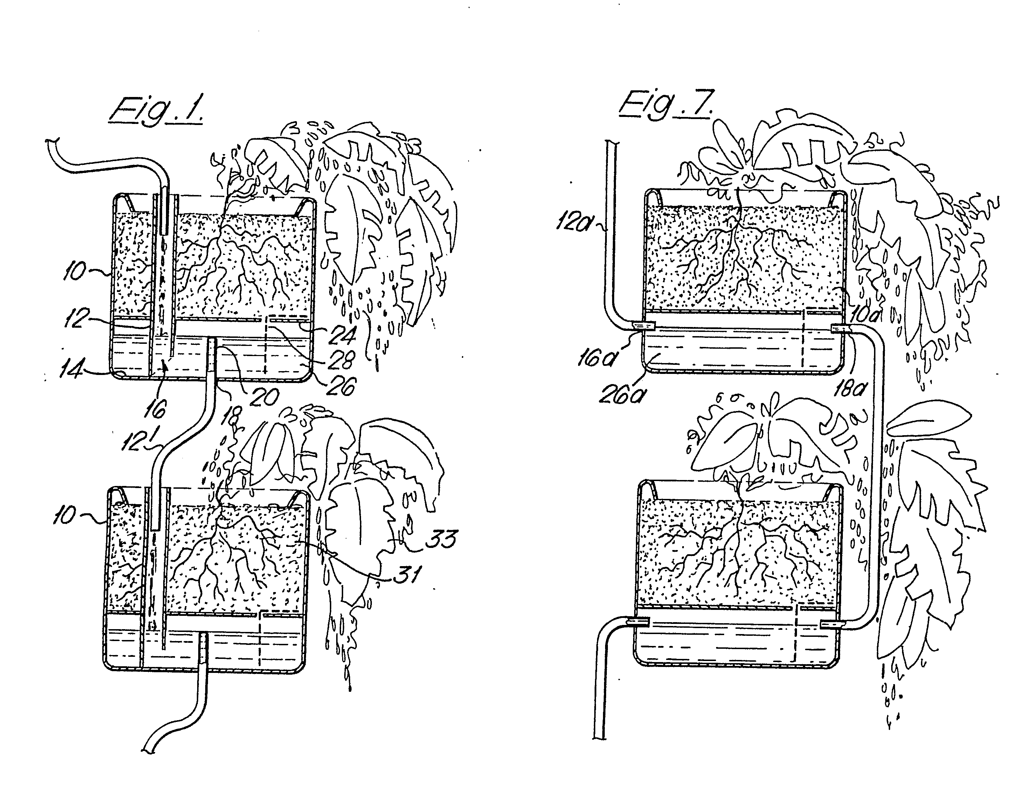

Fig. 1 illustrates generally a first embodiment of apparatus according to the invention;

Fig. 2 is a side elevation of the apparatus showing two containers suspended from support means;

Fig. 3 is an end view corresponding to Fig. 2;

Fig. 4 illustrates a plurality of rows of containers;

0012011

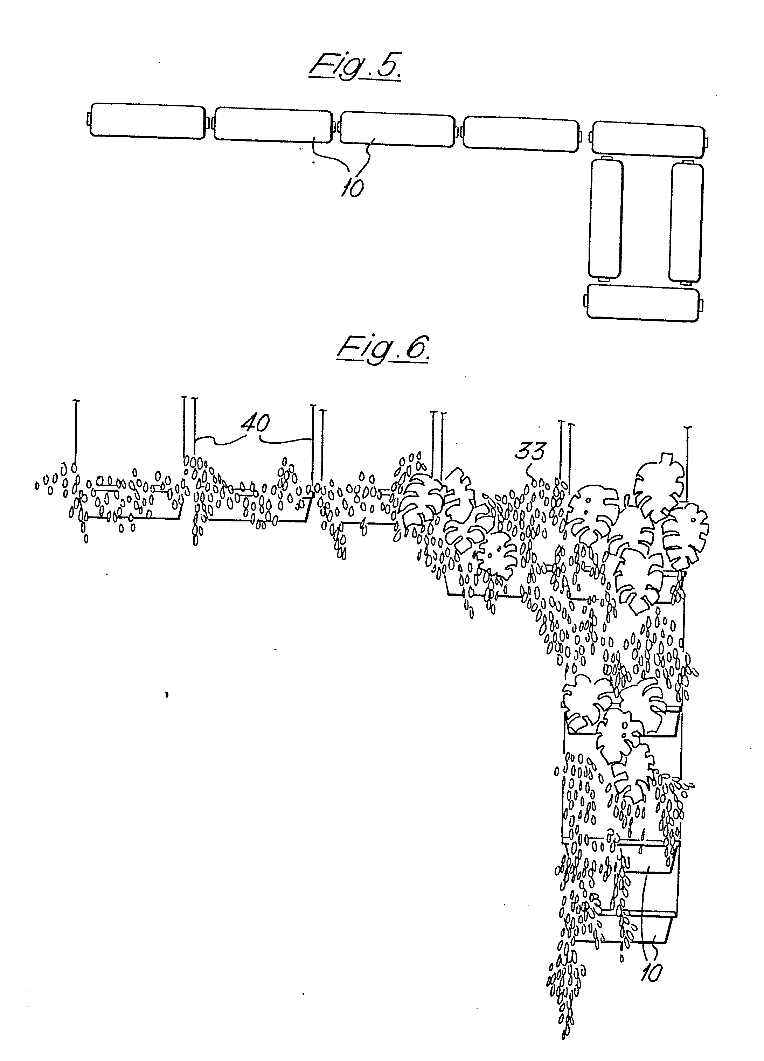

Fig. 5 illustrates in plan an arrangement of containers;

Fig. 6 is an elevation corresponding to Fig. 5 but showing plants in the containers;

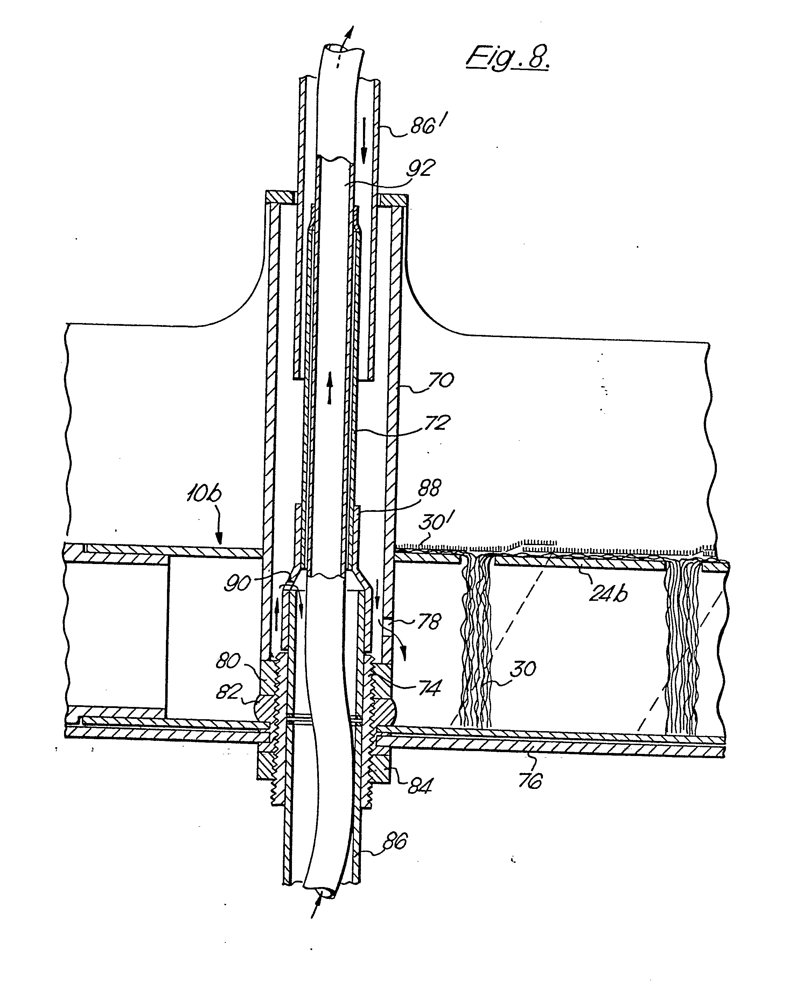

Fig. 7 illustrates generally a modification of the first embodiment of the apparatus; and

Fig. 8 is a sectional elevation of a second embodiment.

Apparatus for use in forming an upright array of plants comprises a plurality of containers or 'planters' 10 spaced in different horizontal planes, i.e. in a column, and interconnected by a water feed means; for example, the planters may be in one vertical row or they may be stepped or alternate planters may be below but in a plane at right angles to that of the one above.

Each planter 10 is an elongate open container and is provided with a tube 12 of, for example, rigid plastics, which stands up from the base 14 of the container and has outlet ports 16 adjacent to the base 14. The tube 12 is preferably located at the middle of the planter but to one side of the longitudinal axis.

An outlet aperture 18, which is preferably of smaller diameter than the feed tube 12, is provided in the base, preferably centrally, and a surrounding wall 20 which may be a flexible plastics collar is located around the aperture 18; this wall allows a predetermined amount (depth) of water to pass into the container before the excess spills over the wall and exits through the outlet aperture. By providing collars of varying height the depth of water in a container can be varied.

The outlet aperture 18 of one container is connected to the feed tube 12' of the lowermost container communicates with a drain 22 or other water collection means.

Each planter has a false bottom 24 spaced above the base and the space 26 between is used as a water reservoir. Apertures 28 are provided in the false bottom so that capillary means 30 can be located therein to draw water from the space between the false bottom and the base.

One form of capillary means 30 is a capillary wick comprising a strip of material which is laid out over the false bottom and portions thereof pushed down each aperture to touch the base. The apertures 28 are preferably arranged in zig-zag formation along the false bottom 24.

The planters may be mounted by any suitable means; for example, secured to a wall, mounted on a standing structure or on a suspended structure.

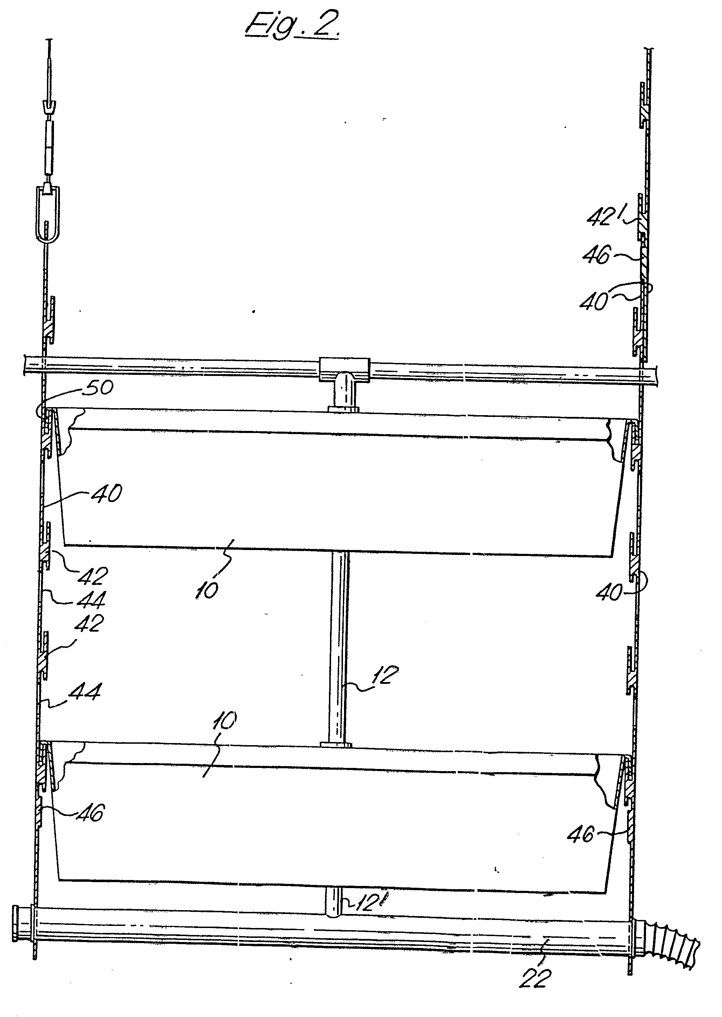

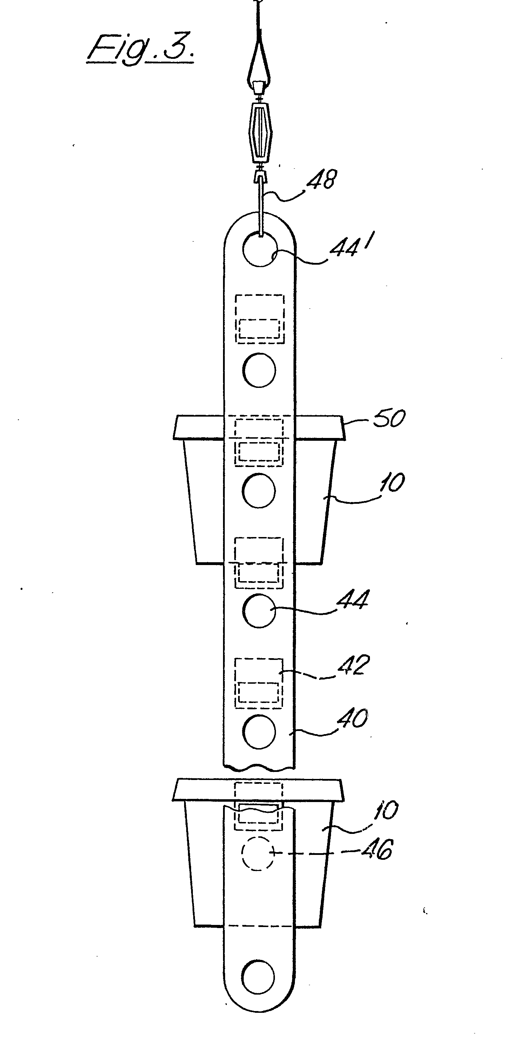

One form of apparatus for mounting the container on a suspended structure is shown in Figs. 2 and 3 and includes a plurality of similar metal or plastics straps 40 which can be made up into pairs of spaced hangers between which planters 10 are mounted; the ends of each planter have connection means engaging co-operating connection means on the straps. In one example, each strap has on one face a series of flanges 42 and a series of round holes 44 alternating therewith. At one end of the strap (the upper end, in use) there is a hole 44' and near the other end (the lower end) there is a stud 46 located adjacent to (in use, below) the lowermost flange 42'. The stud is adapted to locate in the top hole 44' of the strap located therebelow. When the hole of the lower strap engages the stud of the upper strap, the upper end of the lower strap engages the flange 42' of the upper strap and secures the straps together to form extended or elongate hangers. The straps or strappings are suspended in pairs, e.g. from a ceiling via cables and shackles 48, and planters 10 are mounted between opposed pairs of hangers 40, the planters having support lugs or lipped edges 50 on their ends engagable with the flanges 42 on the straps. The lowermost straps may be added to or removed as required. Straps or strappings may also be supported from a floor mounting in the form of stackers on which the planters are mounted as before.

As a number of flanges are provided, the vertical distances between planters can be varies depending

on the height of the plants and other design criteria.

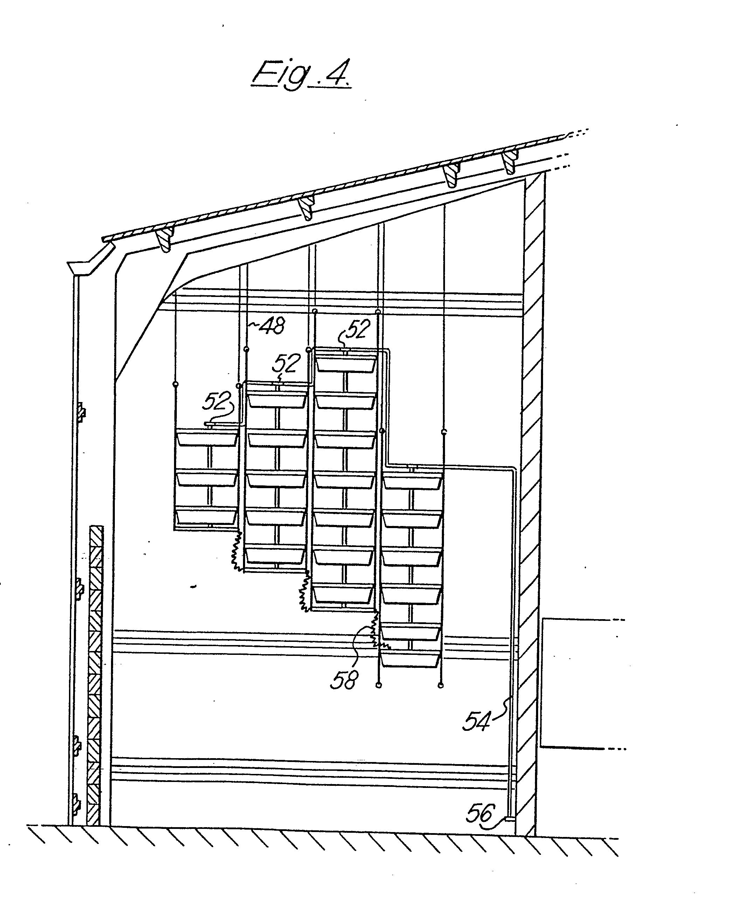

A series of columns of planters can be provided, as illustrated in Fig. 4. Each series may have the same number and disposition of planters or the number and disposition may vary. The spacing between columns can also be varied by altering the distance between the pairs of support strappings (hangers or stackers) or adjacent columns. The uppermost feed tube 12 of each planter of a column is connected to a single water supply source, namely, a pipe 54 from the mains supply tap 56, by, for example, a T-piece connector 52 having an internal restrictor, and each lowermost planter of a column is connected to a common outlet pipe 58 for lateral drainage.

In use, the planters are normally fitted with the capillary wicks 30 on top of which is a capillary mat 30' (Fig. 8) secured to the sides of the planters, e.g. by adhesive tape. Thereafter, the planter is filled with growing medium 31, i.e. compost, and the plants 33 located therein.

In certain cases, for plants which grow in water, the growing medium is simply water and no capilary wicks, mats or compost are required. In such a case, the outlet aperture surrounding will extend considerably higher into the planter than otherwise, to the desired water level.

Columns or series of columns can be arranged in many different formations of which the following are examples.

Pillars

    i) A single vertical container of planters is arranged with alternative planters at right angles to the adjacent planters, giving, in plan, an X formation.

    ii) Three vertical columns are arranged to give, in plan, a triangular formation.

    iii) Four vertical columns of planters are arranged to give, in plan, a square rectangular or H formation.

Curtains

A series of vertical columns of planters are arranged end to end either straight or in zig-zag formation to form a curtain.

Additional series of columns may extend, e.g. at right angles to the curtain.

Wall Coverings

A series of columns of planters may be located along or in front of one or more walls of a room.

In all the above arrangements the provision of plants in the planters will provide columns, curtains or tapestry wall coverings and meet a need for internal planting in places which up till now have been largely undeveloped, for example, wall surfaces, high spaces and areas with limited floor space.

The system may be employed to cover areas of wall with plants to any height, width or pattern, or to create or suspend continuous columns of plants to any height. Thus, for example, a close-knit, but irregular pattern of Monsterra can be erected to create immediately the effect of one large, Rhoicissus to give the impression of years of steady growth; or a tapestry of many species can be assembled in varying combinations to suit the demands for colour, texture and variety.

Planters 10 may be removed and replaced easily without having to disconnect or reconnect any parts.

While the various examples have referred to vertical columns, it will be appreciated that the planters may be stepped, i.e. generally, but not exactly, one below the other.

The hangers and stackers are not interchangeable. The stackers plug into each other end to end and consist of a hanger with an additional and parallel strap of metal bonded together with two longitudinal side pieces.

In a modification of the drainage system, the inlet feed tube 12a extends alongside a planter 10a and passes into the reservoir portion 26a thereof through an aperture 16a in a side wall of the planter. Similarly, the outlet aperture 18a is provided in the same or another side wall of the planter.

The inlet and outlet apertures are horizontally aligned and determine the maximum water level in the reservoir, or the outlet aperture 18a is lower than the inlet aperture 16a. The planters 10, 10a may have a feed tube or outlet 12, 18 as described in the preferred embodiment and an outlet or feed tube 18a,12a as described in the modification.

The container need not be flat based or of rectangular cross-section; for example, the container may be generally cylindrical.

The containers,instead of using capillary wicks, may be made of porous material which allows the water to percolate through, depending on the dryness and osmotic pressure of the plant and root medium.

The containers may have flanges, brackets, studs or saddles on opposed ends and the support straps may have simply holes for engaging the projections on the container ends.

In a second embodiment, Fig. 8, the inlet and outlet pipes 70, 72 are formed of lengths of concentric tubing, each length being secured to another, e.g. by screw threaded connectors 74. One length of tubing will now be described. It includes an outer casing 70 which is located upright in the container 10b, extending from the base 76 through the false bottom 24b to the top of the container or above. The casing 70 terminates short of the base and has an aperture 78 in its wall adjacent to its lower edge. Within the casing is an inner tube 72, the lower part of which is wider than the remainder. This lower part of the inner tube extends below the level of the casing to the base of the container at which location the base has an aperture of greater diameter than the inner tube. A sleeve 74, which is externally threaded, encircles the lower part of said inner tube and extends downwards through the base aperture. A nut 80 is located around the upper part of said sleeve and a washer 82 is located therebelow so that on rotation the nut will press down on the washer to ensure a water-tight seal against the base.
The lower end of the sleeve also carries a nut 84 which, when rotated to move upwards, engages the underside of the container.

The lower end of the sleeve receives the upper end of an overflow pipe 86 which extends downwards to connect with a subjacent length of concentric tubing.

The inner tube 72 is formed by two pieces of tubing of different diameters joined longitudinally by a sleeve 88 which has an aperture 90 in its wall; this aperture 90 is located above the level of the aperture 78 in the outer casing 70.

At the upper end of the outer casing an overflow pipe 86 from the tubing immediately thereabove, extends into the casing and surrounds the upper part of the inner casing.

Threaded through the joined tubing is an innermost continuous flexible small diameter pipe 92 which carries water up to the top plants, e.g. from a tap.

In use, water from one planter passes through the overflow tube 86' into the tubing of the subjacent planter 10". Referring now to Fig. 8, water passes down the inside of the outer casing 70 and exits at the aperture 78 therein into the bottom or reservoir part of the planter. Once the water level has risen to the level of the aperture in the sleeve inner tube, i.e. the maximum water level, excess water drains through said aperture into the overflow pipe to the next planter.

0012011

## CLAIMS

1. Apparatus for use in producing an upright array of plants comprising a plurality of containers spaced in different horizontal planes and interconnected by water feed means which includes a water inlet tube communicating with the base of each container and a water outlet located in each container at a height above the base to permit formation of a water reservoir in, and over-flow from each container, said outlet being connected to the inlet tube of the adjacent lower container, the outlet of the lowermost container communicating with a drain or other water collection means.

2. Apparatus as claimed in Claim 1, in which each water outlet aperture is in the base of the container and has an upstanding surround over which excess water flows.

3. Apparatus as claimed in Claim 1 or 2, in which each container includes a false bottom on which medium for the plants can be located, said false bottom having a plurality of apertures to receive capillary means. Preferably also, the water inlet tube extends through said false bottom and has outlet ports therebelow.

4. Apparatus as claimed in Claim 1, 2 or 3 in which series of pluralities of containers is provided each plurality of containers being spaced in different vertical planes.

5. Apparatus as claimed in Claim 4, in which the uppermost container of each series is interconnected with a single source of feed water.

6. Apparatus as claimed in Claim 4 or 5, in which the lowermost container of each series is interconnected to a single outlet to a drain or other water collection means.

7.     Apparatus as claimed in any one of Claims 1 to 6, in which the containers have support engagement means and support members are provided for engaging said means, said support members comprising straps having engagement means to co-operate with the engagement means on the containers, straps located in vertical disposition and spaced apart horizontally to receive one or more containers therebetween.

8.     Apparatus as claimed in Claim 7, in which said straps are suspended and have co-operating fitment means permitting a plurality of straps to be connected end to end. Preferably, each strap has on one side a series of flanges and an alternating series of holes, one of which is at one end of the strap, and a stud at the other end adapted to engage a hole of an adjacent strap, thereby to form an elongate strapping adapted for location in opposed pairs to receive containers therebetween, said containers having means for engaging flanges on the opposed strappings.

9.     A method of arranging plant containers comprising the steps of locating a plurality of containers in different horizontal planes, providing a cascading water feed in the form of a water inlet to each container and a water outlet in each container connected to the water inlet of the adjacent lower container and locating each water outlet at a height which allows a predetermined depth of water to collect in the respective container during feeding and after which excess water will overflow through said outlet into the adjacent lower container and feeding the excess water from the lowermost container to a drain or other water collection means.

10.    Apparatus for use in producing an upright array of plants substantially as hereinbefore described with reference to the accompanying drawings.

11.    A method of arranging plant containers substantially as hereinbefore described.

_Fig.1._

_Fig.7._

1/6

## Fig. 2.

## Fig.3.

Fig.4.

_Fig.5._

10

_Fig.6._

40

33

10

*Fig.8.*

86'

92

70

72

10b

88

30'

90

24b

78

30

80

74

82

84

76

86

**European Patent Office**

**EUROPEAN SEARCH REPORT**

Application number

`0012011`

EP 79 302 715.2

| Category | Citation of document with indication, where appropriate, of relevant passages | Relevant to claim | CLASSIFICATION OF THE APPLICATION (Int. Cl.3) |
|---|---|---|---|
| | DE - A1 - 2 704 414 (B. ALBRECHT) <br> * page 7, line 1 to page 8, line 5; fig. 1 to 3 * | 1,3,5, 9-11 | A 01 G 9/00 <br> A 01 G 27/00 |
| | DE - A1 - 2 648 974 (R. MORITZ) <br> * page 7, line 11 to page 8, line 18; fig. 1, 4, 5 * | 1,4, 9-11 | |
| P | FR - A1 - 2 390 897 (GLORIA S.A.) <br> * page 2, lines 15 to 36; fig. * | 1,4,7, 9-11 | TECHNICAL FIELDS SEARCHED (Int.Cl.3) |
| P | DE - U1 - 7 835 230 (E. SCHUMM) <br> * fig. * | 1,2 | A 01 G 9/00 <br> A 01 G 27/00 <br> A 01 G 31/00 |
| A | US - A - 3 365 840 (A.J. COOPER) <br> * fig. 1 * | 1 | |
| A | US - A - 4 033 072 (H. KOBAYASHI et al.) <br> * abstract; fig. 1 * | 1 | |
| A | DE - A1 - 2 455 219 (INTERMOOS AG) <br> * entire document * | 1 | CATEGORY OF CITED DOCUMENTS <br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br> &: member of the same patent family, corresponding document |

## DOCUMENTS CONSIDERED TO BE RELEVANT

X  The present search report has been drawn up for all claims

| Place of search | Date of completion of the search | Examiner |
|---|---|---|
| Berlin | 18-02-1980 | SCHOFER |

EPO Form 1503.1  06.78